# FASCICULE DE BREVET EUROPEEN

(11) **EP 1 876 049 B1**
(45) Date de publication et mention de la délivrance du brevet: **22.07.2009**
(21) Numéro de dépôt: 07350007.6
(22) Date de dépôt: 22.05.2007
(51) Int. Cl.: B60J 10/00

(54) **Dispositif d'évacuation d'eau équipant une voiture à toit escamotable**
Wasserablaufvorrichtung für ein Kraftfahrzeug mit Schiebedach
Water evacuation device for a car with a retractable roof

(30) Priorité: 06.07.2006 FR 0606132
(43) Date de publication de la demande: 09.01.2008
(73) Titulaire: Heuliez, 79180 Cerizay (FR)
(72) Inventeur: Quéveau, Gérard, 79140 Le Pin (FR); Quéveau, Paul, 79140 Montravers (FR); Guillez, Jean Marcq, 79140 Cirières (FR)
(74) Mandataire: Tournel, Jean Louis

(56) Documents cités:
- EP-A- 1 671 831
- DE-C1- 3 910 257
- US-B1- 6 419 308

## Description

L'invention se rapporte à un dispositif d'évacuation d'eau équipant une voiture à toit escamotable.

On connaît de nombreux toits escamotables qui sont constitués soit de panneaux repliables par rotation autour d'un axe transverse soit de panneaux coulissants vers l'arrière puis déplacement de haut en bas pour un rangement dans le coffre.

Notamment, dans le cas de toit à panneaux coulissants, les brancards latéraux du toit restent en place.

Compte tenu de cette constitution en panneaux, il faut donc prévoir des moyens d'étanchéité pour les bords des panneaux et des moyens en vue de parer à un défaut d'étanchéité.

Pour obtenir une certaine étanchéité, il est connu de faire usage de joints à lèvres mais malheureusement avec les pressions qui s'exercent lorsque le véhicule circule, de l'eau parvient à passer entre les joints à lèvres et à pénétrer dans l'habitacle.

Il est connu de faire appel à des gouttières qui canalisent l'eau ayant pénétré mais il faut bien évidemment évacuer l'eau hors de l'habitacle en n'entravant pas le mouvement du toit.

Pour ne pas entraver les mouvements, il est connu de faire appel à des conduites souples divulguées dans les documents DE 3910257 ou EP 1 671 831 reliant une gouttière d'un panneau à une conduite fixée sur la carrosserie permettant ainsi le mouvement du panneau mais la solution n'est pas esthétique et complexe à mettre en oeuvre. Cette solution est également fragile car la conduite souple est constamment sollicitée par les mouvements du toit et du véhicule d'où un risque de cisaillement au niveau des jonctions.

L'invention se propose d'apporter une solution simple.

A cet effet, l'invention se rapporte à un dispositif d'évacuation d'eau équipant un toit escamotable comprenant au moins une gouttière de récupération reliée à une conduite d'évacuation, ce dispositif d'évacuation étant caractérisé en ce que la conduite d'évacuation est portée par une vitre mobile montée coulissante sur la carrosserie du véhicule dont elle est solidaire.

L'invention sera bien comprise à l'aide de la description ci après faite à titre d'exemple non limitatif en regard du dessin qui représente
FIG 1 : Coupe longitudinale d'un véhicule au niveau des gouttières latérales avec une coupe transverse selon AA et une coupe transverse selon BB
FIG 2 Coupe longitudinale, le toit escamotable étant rangé
FIG 3 Vue de ¾ arrière de la lunette arrière
FIG 4 vue de dessus selon IV de la figure 3
FIG 5 Coupe selon V-V de la figure 3
FIG 6a Vue de dessus d'un véhicule, le toit étant fermé
FIG 6b vue de dessus d'un véhicule, le panneau avant et médian étant coulissés sur le panneau arrière et la lunette arrière étant abaissée
FIG 6c Vue de dessus d'un véhicule, le toit escamotable étant rangé dans le coffre.
FIG 6d : Vue éclatée d'un toit
FIG 7 Vue latérale d'un véhicule a toit rétractable d'une autre technique
FIG 7C : Coupe C-C de la figure 7
FIG 7D : détail D de la figure 7.

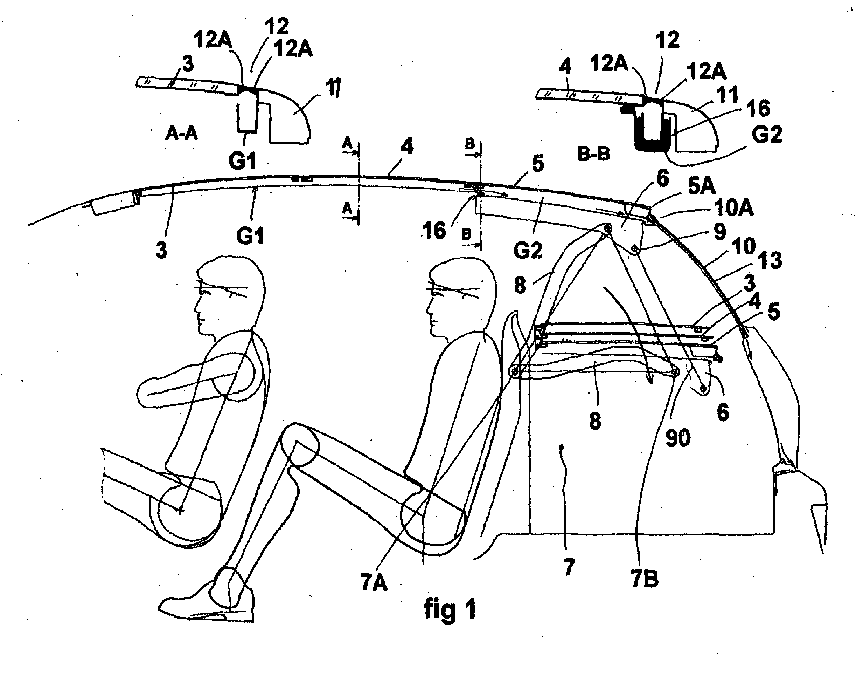

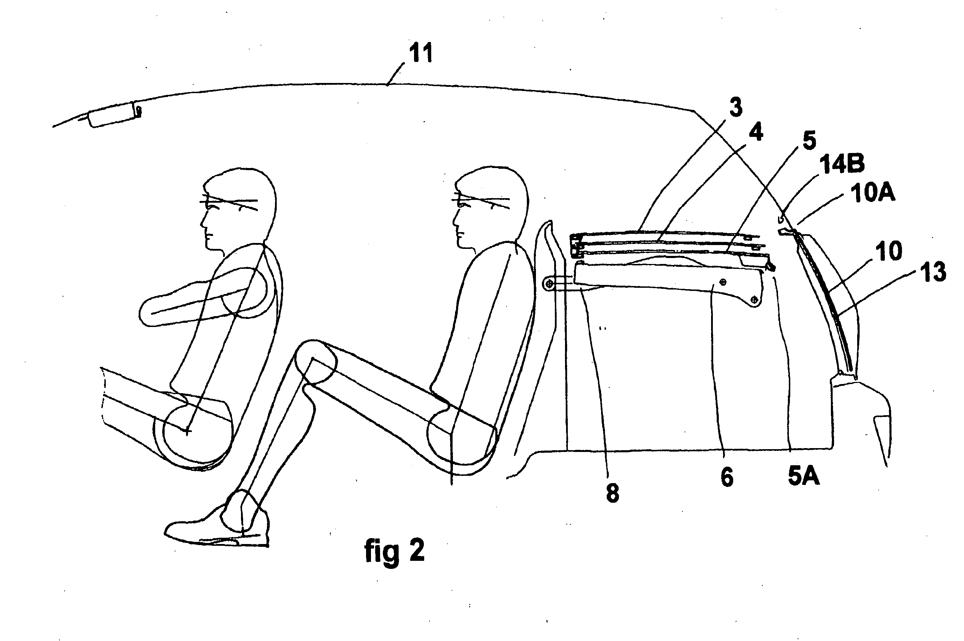

En se reportant au dessin, on voit un véhicule à toit 1 escamotable pouvant occuper une position couvrant l'habitacle (figure 1, figure 6a, figure 7) et une position où ce toit est rangé dans le coffre (figures 1, 2 et 6c).

Dans l'exemple représenté aux figures 1 à 6, le toit comprend un panneau avant 3, un panneau médian 4 et un panneau arrière 5, ce dernier étant porté par une platine 6.

Pour le rangement, le panneau avant 3 vient au dessus du panneau médian 4 lequel vient sur le panneau arrière 5. L'ensemble des panneaux 3, 4, 5 est alors descendu dans le coffre 2 par un mécanisme 7 de manoeuvre.

Dans cet exemple, le mécanisme de manoeuvre comprend une bielle 8 articulée à sa base 7A sur la caisse du véhicule sensiblement au niveau haut du dossier arrière. Son extrémité haute est articulée sur la platine 6, par un pivot 7b. La platine est en outre guidée en translation par un doigt 9 coulissant dans un rail de guidage 90 droit ou courbe selon le véhicule.

La platine portant les panneaux va donc conserver approximativement son orientation sensiblement horizontale pendant la descente ou la montée.

Dans son mouvement de descente, cet ensemble va reculer et pour ce faire, la lunette 10 arrière doit être abaissée.

En effet le bord arrière 5A du panneau 5 arrière sert de zone d'appui pour le bord 10A supérieur de la lunette arrière.

Les panneaux de ce toit ont une largeur moindre que la largeur du toit et de ce fait lorsque les panneaux sont rangés, il persiste sur le véhicule les brancards 11 latéraux qui joignent la traverse du pare-brise à la structure arrière de la caisse en surplombant les portières.

Entre ces brancards et les bords latéraux des panneaux est prévu un moyen 12 d'étanchéité tel un ensemble de deux joints 12A, 12B à lèvres se recouvrant (coupe A-A et B-B de la figure 1)

Un dispositif d'évacuation de l'eau est prévu. Il comprend au moins une gouttière G1, G2 de récupération reliée à une conduite 13 d'évacuation.

Avantageusement, la conduite d'évacuation 13 est portée par une vitre mobile, ici la lunette 10 arrière du véhicule, dont elle est solidaire.

Cette conduite d'évacuation est donc liée aux déplacements de la lunette 10 arrière.

Par vitre mobile, on comprendra les vitres latérales ou arrière.

Elle se situe au voisinage du bord latéral de la lunette arrière. Cette conduite d'évacuation est portée par la face interne de la lunette arrière. Elle peut être collée ou maintenue par un profilé coiffant le champ vertical de la lunette arrière.

La jonction entre le point bas de la gouttière et la conduite d'évacuation se fait soit par présentation du point d'écoulement de la gouttière au dessus de l'entrée de la conduite d'évacuation soit par emboîtement.

Le point bas de la gouttière comprend un court manchon 14 A orienté vers le bas qui pénètre dans une sorte d'entonnoir 14B que présente l'entrée de la conduite d'évacuation 13.

L'entonnoir et la conduite d'évacuation sont en une ou deux pièces.

L'emboîtement peut se faire avec un jeu très important.

L'eau qui s'écoule dans la conduite 13 d'évacuation tombe dans la porte arrière qui classiquement comporte un trou 15 d'évacuation à sa base.

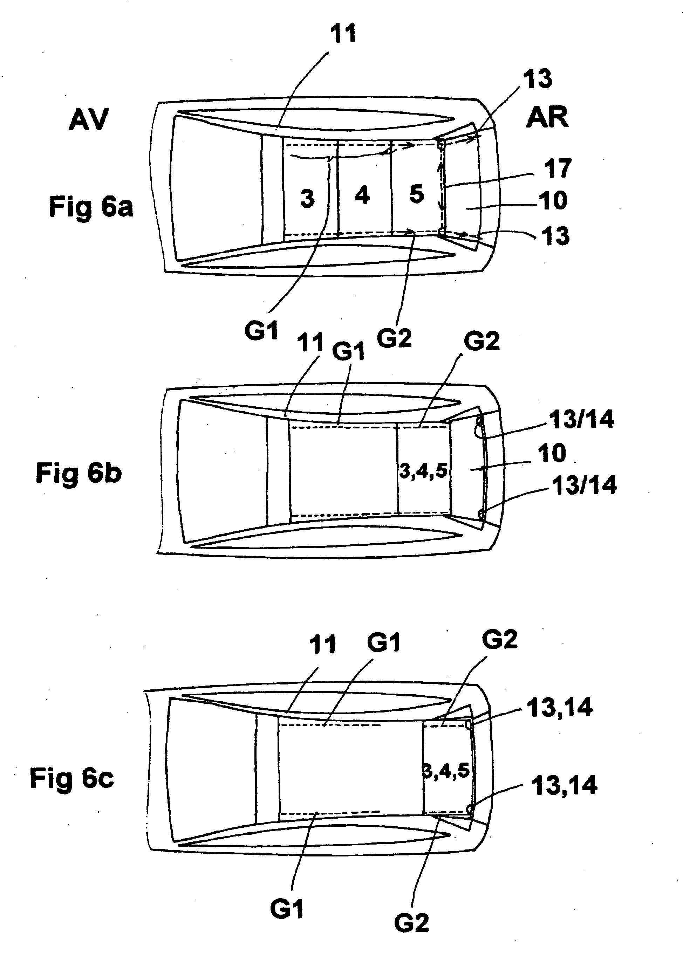

Le véhicule comprend depuis l'avant, une gouttière G1 dite fixe qui, s'étendant sous les panneaux avant et médian, est portée par le brancard. Cette gouttière G1 se déverse dans une gouttière G2 dite mobile portée par le panneau arrière ou la platine. Les figures 6a à 6c montrent en traits pointillés les positions de ces gouttières et l'entrée de la conduite d'évacuation.

Cette gouttière mobile se situe dans le prolongement de la dite gouttière fixe et partiellement dessous figure 1 et coupe BB. Un joint 16 réalise l'étanchéité au niveau de la transition entre les deux gouttières, la gouttière mobile étant de plus grande section. C'est l'extrémité aval de cette gouttière mobile qui présente un court manchon 14 qui coopère avec l'entrée de la conduite d'évacuation.

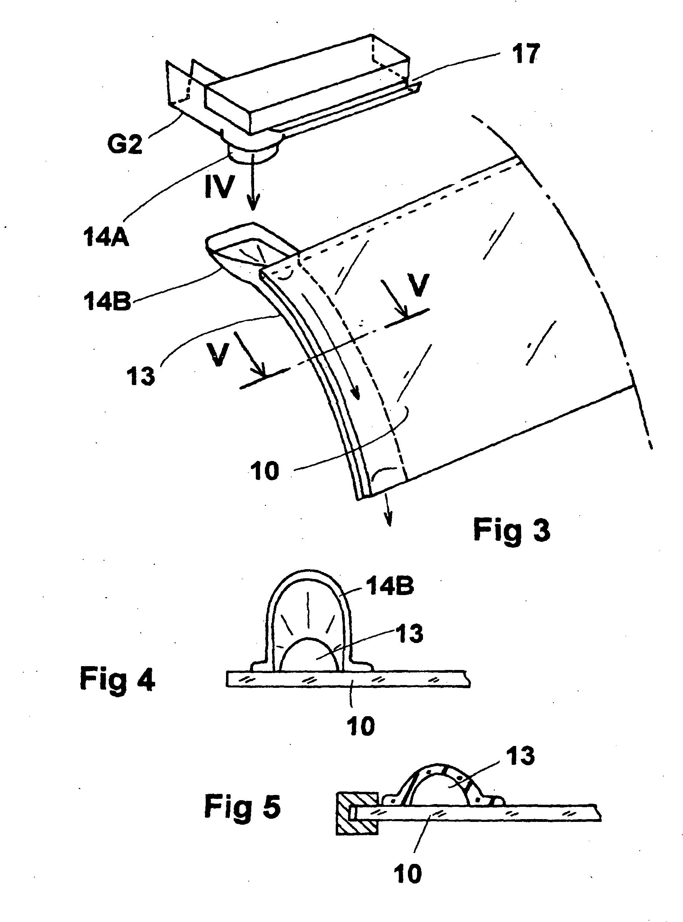

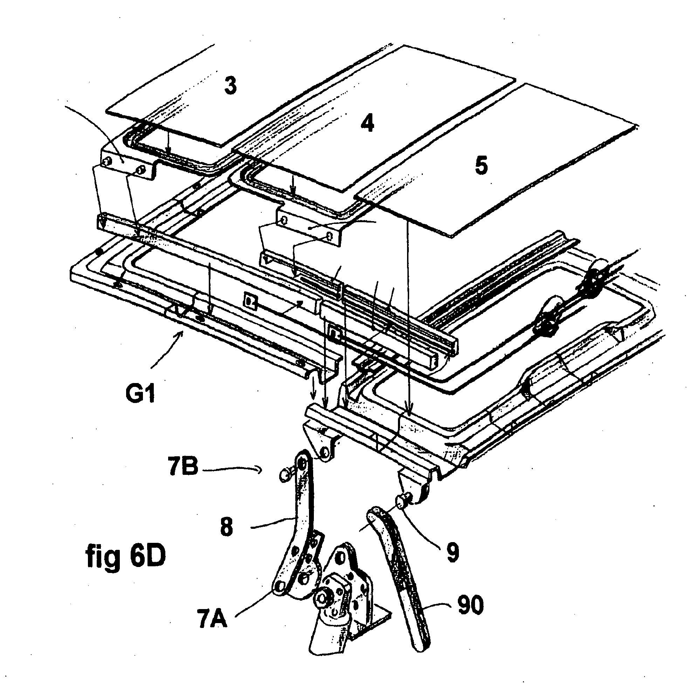

Une gouttière 17 transversale arrière aboutit également au niveau de ce manchon 14 qui joue un rôle de collecteur (figure 3 et 6 d).

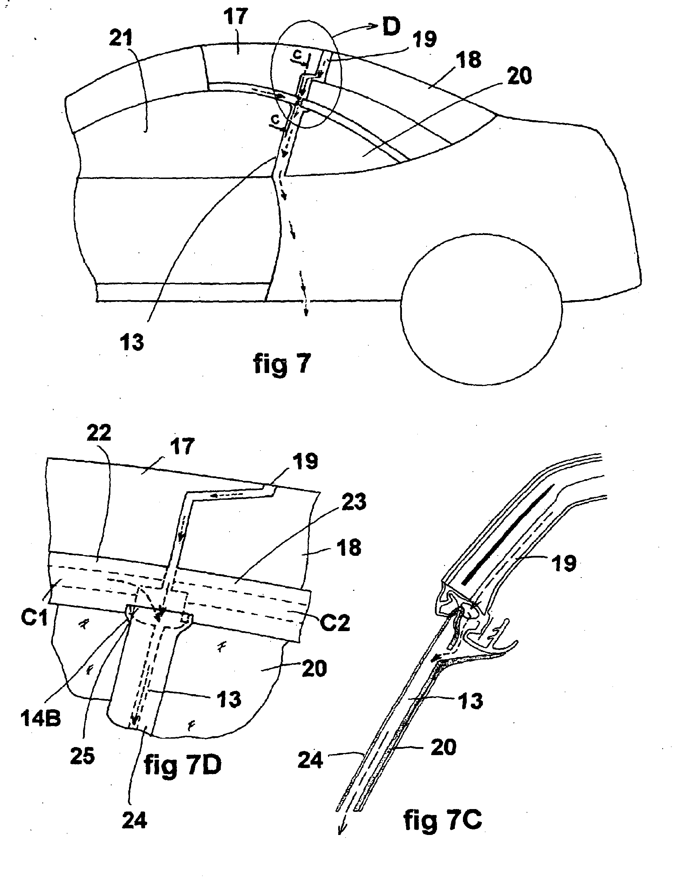

En figure 7 et suivante, on a représenté un toit rétractable d'un autre type permettant d'obtenir un véhicule complètement découvert du type cabriolet.

Sur le type toit de véhicule représenté, il existe une articulation transverse entre les panneaux 17, 18 et il est donc préférable de prévoir une gouttière 19 transversale disposée au niveau de cette articulation. Cette gouttière étant à l'intérieur de l'habitacle, il faut évacuer l'eau collectée. Le problème est donc identique à celui du toit décrit aux figures 1 à 6.

Dans ce cas, on voit que la conduite 13 d'évacuation est portée par une vitre 20 latérale dite vitre de custode montée mobile sur le véhicule, ici coulissante vers le bas afin de l'escamoter dans l'aile arrière. La conduite a une forme évasée 14B en entonnoir en son entrée. Ici, la conduite 13 est en partie à l'extérieur.

Avantageusement, cette conduite 13 d'évacuation forme également un joint 24 ( figures 7c , 7d) pour le bord latéral arrière de la vitre 21 latérale de portière, c'est à dire que la partie tournée vers l'avant du véhicule vient coiffer le bord latéral de la vitre de portière.

Dans le cas représenté aux figures 7 et suivantes, les gouttières sont intégrées aux joints 22, 23 d'étanchéité bordant le bord supérieur de la vitre latérale de portière et la vitre latérale de custode. C'est à dire que la partie interne des joints forment des canaux C1, C2 d'acheminement de l'eau récupérée et la partie externe forme un joint d'appui.

Les canaux C1 et C2 ainsi que la gouttière 19 transversale se déversent dans la partie évasée 14B de la conduite d'évacuation 13.

Plus précisément, la partie évasée 14B vient coiffer par le dessous les joints 22 et 23. Ceux ci présentent une ouverture 25 située en face de la partie évasée. La partie évasée capte donc l'eau en provenance des canaux C1 et C2 en provenance de la gouttière 19.

## Revendications

1. Dispositif d'évacuation d'eau équipant un toit escamotable comprenant au moins une gouttière de récupération (G1, G2) reliée à une conduite d'évacuation (13), ce dispositif d'évacuation étant **caractérisé en ce que** la conduite d'évacuation est portée par une vitre mobile montée coulissante sur la carrosserie du véhicule dont elle est solidaire.

2. Dispositif d'évacuation selon la revendication 1 **caractérisé en ce que** la conduite d'évacuation a une fonction de joint d'appui.

3. Dispositif d'évacuation selon la revendication 1 ou 2 **caractérisé en ce que** l'entrée de la conduite est évasée.

4. Dispositif d'évacuation d'eau selon la revendication 1 ou 2 ou 3 **caractérisé en ce qu'**il est monté sur la lunette arrière (10) d'un véhicule.

5. Dispositif d'évacuation d'eau selon la revendication 1 ou 2 ou 3 **caractérisé en ce qu'**il est monté sur une vitre latérale (20) d'un véhicule.

6. Dispositif d'évacuation selon l'une quelconque des revendications précédentes **caractérisé en ce que** la jonction entre le point bas de la gouttière et la conduite d'évacuation se fait par présentation du point d'écoulement de la gouttière au dessus de l'entrée de la conduite d'évacuation.

7. Dispositif d'évacuation selon la revendication 6 **caractérisé en ce que** la jonction entre le point d'écoulement et la conduite d'évacuation se fait par emboîtement.

8. Véhicule à toit rétractable comprenant un panneau avant 3, un panneau médian 4 et un panneau arrière 5, ce dernier étant porté par une platine 6 les dits panneaux coulissants vers l'arrière pour être descendus dans le coffre **caractérisé en ce qu'**il comprend un dispositif d'évacuation selon les revendications, 1,2,3,4,6,7.

9. Véhicule à toit rétractable selon la revendication 8 **caractérisé en ce qu'**il comprend une gouttière G1 dite fixe qui, s'étendant sous les panneaux avant et médian, se déverse dans une gouttière G2 dite mobile portée par le panneau arrière ou la platine.

10. Véhicule à toit rétractable comprenant des panneaux 17,18 articulés transversalement **caractérisé en ce qu'**il comprend un dispositif d'évacuation selon l'une des revendications 1,2,3, 5,6,7.

## Claims

1. Device for draining water fitted on a retractable roof, comprising at least one catchment gutter (G1, G2) linked to a drainage duct (13), this drainage device is **characterised in that** the drainage duct is supported by a moving window mounted so that it can slide on the body of the vehicle, to which it is secured.

2. Drainage device as in claim 1, **characterised in that** the drainage duct fulfils the function of a support seal.

3. Drainage device as in claim 1 or 2, **characterised in that** the inlet of the duct is flared.

4. Water drainage device as in claim 1 or 2 or 3, **characterised in that** it is mounted on the rear window (10) of a vehicle.

5. Water drainage device as in claim 1 or 2 or 3, **characterised in that** it is mounted on a side window (20) of a vehicle.

6. Drainage device as in any one of the preceding claims, **characterised in that** the connection between the bottom point of the gutter and the drainage duct is such that the outflow point of the gutter is disposed above the inlet of the drainage duct.

7. Drainage device as in claim 6, **characterised in that** the connection between the outflow point and drainage duct is a nested arrangement.

8. Vehicle with a retractable roof comprising a front panel 3, a centre panel 4 and a rear panel 5, the latter being supported on a lockplate 6, and the panels slide towards the rear so that they can be lowered into the boot, **characterised in that** it incorporates a drainage device as in claims 1,2,3,4,6,7.

9. Vehicle with a retractable roof as in claim 8, **characterised in that** it has a stationary gutter G1 extending underneath the front and centre panels and draining into a moving gutter G2 supported by the rear panel or lockplate.

10. Vehicle with a retractable roof comprising transversely articulated panels 17, 18,
**characterised in that** it incorporates a drainage device as in one of claims 1,2,3, 5,6,7.

## Patentansprüche

1. Vorrichtung zur Wasserableitung mit der ein versenkbares Verdeck ausgestattet ist, mit wenigstens einer Sammelrinne (G1, G2), die mit einem Ableitungsrohr (13) verbunden ist, wobei die Ableitungsvorrichtung **dadurch gekennzeichnet ist, dass** das Ableitungsrohr von einer auf der Fahrzeugkarosserie verschiebbar angebrachten beweglichen Fensterscheibe getragen wird, mit der es fest verbunden ist.

2. Ableitungsvorrichtung nach Anspruch 1, **dadurch gekennzeichnet, dass** das Ableitungsrohr die Funktion einer Auflagedichtung hat.

3. Ableitungsvorrichtung nach Anspruch 1 oder 2, **dadurch gekennzeichnet, dass** der Rohreingang erweitert ist.

4. Wasserableitungsvorrichtung nach Anspruch 1 oder 2 oder 3, **dadurch gekennzeichnet, dass** sie auf der Heckscheibe (10) eines Fahrzeugs angebracht ist.

5. Wasserableitungsvorrichtung nach Anspruch 1 oder 2 oder 3, **dadurch gekennzeichnet, dass** sie auf einer Seitenscheibe (20) eines Fahrzeugs angebracht ist.

6. Ableitungsvorrichtung nach einem der vorhergehenden Ansprüche, **dadurch gekennzeichnet, dass** die Verbindung zwischen dem unteren Punkt der Rinne und dem Ableitungsrohr **dadurch** hergestellt wird, dass der Abflusspunkt der Rinne über dem Eingang des Ableitungsrohrs liegt.

7. Ableitungsvorrichtung nach Anspruch 6, **dadurch gekennzeichnet, dass** die Verbindung zwischen dem Abflusspunkt und dem Ableitungsrohr durch Ineinanderstecken erfolgt.

8. Fahrzeug mit Klappverdeck mit einem vorderen Dachelement 3, einem mittleren Dachelement 4 und einem hinteren Dachelement 5, wobei Letzteres von einer Platte 6 getragen wird und die Dachelemente nach hinten geschoben werden, um in den Kofferraum abgesenkt zu werden, **dadurch gekennzeichnet, dass** es eine Ableitungsvorrichtung nach den Ansprüchen 1, 2, 3, 4, 6, 7 umfasst.

9. Fahrzeug mit Klappverdeck nach Anspruch 8, **dadurch gekennzeichnet, dass** es eine ortsfeste Rinne G1 aufweist, die sich unter dem vorderen und dem mittleren Dachelement verlaufend in eine von dem hinteren Dachelement oder der Platte getragene bewegliche Rinne G2 entleert.

10. Fahrzeug mit Klappverdeck mit quer angelenkten Dachelementen 17, 18, **dadurch gekennzeichnet, dass** es eine Ableitungsvorrichtung nach einem der Ansprüche 1, 2, 3, 5, 6, 7 umfasst.
